Europäisches Patentamt

European Patent Office

Office européen des brevets

(11) Numéro de publication : **0 055 187**
**B1**

(12) **FASCICULE DE BREVET EUROPÉEN**

(45) Date de publication du fascicule du brevet :
24.04.85

(21) Numéro de dépôt : 81402056.6

(22) Date de dépôt : 23.12.81

(51) Int. Cl.⁴ : **F 16 K 47/08**

(54) **Vanne de régulation et clapet pilote.**

(30) Priorité : 23.12.80 FR 8027267

(43) Date de publication de la demande :
30.06.82 Bulletin 82/26

(45) Mention de la délivrance du brevet :
24.04.85 Bulletin 85/17

(84) Etats contractants désignés :
AT BE CH DE FR GB IT LI LU NL

(56) Documents cités :
FR-A- 2 121 336
FR-A- 2 152 151
FR-A- 2 381 219
US-A- 4 004 613

(73) Titulaire : **SEREG S.A.**
**12, place des Etats-Unis**
**F-92120 Montrouge (FR)**

(72) Inventeur : **Lephilibert, Jean**
**37, rue Collange**
**F-92300 Levallois Perret (FR)**

(74) Mandataire : **Dronne, Guy et al**
**Giers Schlumberger 12 Place des Etats-Unis B.P. 121**
**F-92124 Montrouge (FR)**

Jouve, 18, rue St-Denis, 75001 Paris, France

## Description

L'invention concerne une vanne ou robinet de régulation à cage et à clapet pilote, notamment pour hautes pressions et grands débits.

On connaît une vanne de ce type correspondant au préambule de la revendication 1 (FR-A-2 381 219), dans laquelle le fluide à commander circule entre une entrée et une sortie dans des ouvertures latérales ménagées dans une cage cylindrique recevant un clapet principal (= obturateur) de réglage de débit, qui obture plus ou moins les ouvertures sous l'effet d'une tige de commande reliée au clapet principal par des moyens élastiques.

Lorsque l'on désire fermer la vanne, on agit sur la tige de manière à ce que le clapet ferme d'abord les ouvertures, puis vienne s'appliquer sur un siège présenté par la cage, un clapet pilote (= soupape pilote) porté par la tige prenant enfin appui sur, et obturant un orifice de passage ménagé dans le fond du clapet principal, appliquant ainsi celui-ci fermement sur son siège.

Dans cette position du clapet principal, le fluide amont passant entre celui-ci et la cage emplit une chambre amont limitée par le chapeau de la vanne, traversé à étanchéité par la tige, et la face amont du clapet principal, exerçant ainsi sur celui-ci une pression qui concourt à l'étanchéité de la fermeture.

Lorsque l'on désire ouvrir la vanne, il suffit de soulever légèrement le clapet pilote, ce qui n'exige qu'un effort réduit, pour découvrir l'orifice traversant le fond du clapet principal et permettre la décompression du fluide emplissant la chambre amont, ce qui a pour effet d'équilibrer les pressions s'exerçant sur le clapet principal et donc de permettre de déplacer ensuite ce dernier facilement.

Cependant, dans cette vanne connue, le fluide aval est en contact avec le clapet principal sur pratiquement toute sa section transversale, si bien que les fluctuations de sa pression, qui résultent par exemple de manœuvres effectuées sur la canalisation sur laquelle est interposée la vanne, et qui peuvent être très rapides et de grande amplitude, exercent sur le clapet principal et la tige des efforts qui sont d'autant plus élevés que le diamètre nominal de la vanne est plus grand, qui entraînent, en position de régulation de la vanne, des vibrations, des battements, et une dérive du clapet principal, et qui sont même susceptibles d'endommager l'équipage mobile de la vanne.

L'invention a pour but de proposer une vanne qui, tout en présentant les avantages des vannes à cage et clapet pilotes connues, ne présente pas leurs inconvénients.

Ce but est atteint par l'invention telle qu'elle est caractérisée dans la revendication 1.

Des modes particuliers de réalisation de l'invention apparaissent dans les revendications dépendantes.

C'est l'organe de séparation fixe (= piston fixe) qui, en encaissant la plus grande partie des variations brutales de la pression du fluide aval, permet de diminuer dans de grandes proportions les forces axiales exercées sur le clapet principal par le fluide aval.

L'invention prévoit de ménager un passage entre l'entrée de la vanne et la chambre amont, et un trou traversant l'organe de séparation fixe et faisant communiquer la sortie et la chambre aval limitée par la face transversale aval du clapet principal et l'organe de séparation.

De cette manière la pression du fluide amont s'exerce sur toute la face transversale amont du clapet principal par écoulement du fluide dans le passage, et dans l'état fermé de la vanne, la pression du fluide présent dans la chambre aval est ramenée à la valeur de la pression aval par passage du fluide de la chambre aval vers la sortie, si bien que la différence des pressions amont et aval exerce sur le clapet principal, comme pour la vanne connue, une force de fermeture s'ajoutant à celle de la tige de commande.

De plus, en choisissant une section du trou traversant suffisamment faible, les variations brutales de pression du fluide aval n'agissent pour la plus grande part sur le clapet principal qu'avec une atténuation et un délai, ce qui augmente la sécurité présentée par la vanne.

De façon préférée, un clapet anti-retour est disposé dans le trou traversant, tout passage brutal du fluide aval vers la chambre aval et le clapet principal étant alors interdit.

De manière avantageuse, la section de l'orifice traversant ménagé dans le clapet principal est largement supérieure à celle du passage entre l'entrée et la chambre amont, et celui-ci présente lui-même une section supérieure à celle du trou traversant l'organe de séparation fixe.

Le fluide a alors toujours tendance à s'écouler du passage vers l'orifice puis vers le trou, et le clapet principal n'est pas freiné dans ses mouvements par le fluide.

Dans la position de régulation de la vanne, dans laquelle le clapet pilote n'obture pas l'orifice ménagé dans le clapet principal, la pression du fluide dans la chambre amont, qui s'exerce sur toute la section transversale du clapet principal et qui est pratiquement égale à la pression amont, est alors sensiblement identique à celle qui règne dans la chambre aval, et qui ne s'exerce que sur une partie de cette section, le reste étant soumis à l'action du fluide aval, si bien que le clapet principal est constamment rappelé vers l'aval et occupe donc une position d'équilibre stable.

De plus, le débattement de la tige par rapport au clapet principal étant limité, ces deux éléments viennent en butée réciproque, la position de la tige étant alors représentative de celle du clapet principal.

Dans une première forme de réalisation, l'organe de séparation fixe est un plateau porté

2

par le corps de la vanne, les parois latérales du clapet principal, en forme de pot, coulissant entre la tranche du plateau et la surface interne de la cage. Seule la tranche annulaire aval de la paroi latérale cylindrique du clapet principal est alors soumise directement aux efforts de pression axiaux du fluide aval.

Avantageusement, le passage est réalisé par un trou traversant la cage et communiquant avec l'entrée de la vanne par un interstice ménagé entre la paroi externe de la cage et le corps de la vanne.

Dans une seconde forme de réalisation, l'organe de séparation fixe est constitué par la cage elle-même, qui comporte alors un fond, la paroi latérale du clapet principal en forme de pot coulissant entre la surface extérieure de la cage et le corps de la vanne.

Le clapet principal est ainsi complètement soustrait à l'action directe du fluide aval.

Avantageusement, le fond de la cage est boulonné à une entretoise solidaire du corps de la vanne, ce qui permet un montage très simple de la cage et élimine tout problème d'étanchéité entre celle-ci et le corps de la vanne.

Dans cette forme de réalisation, le corps est conformé de manière que dans les positions de régulation et de fermeture, la surface extérieure de la paroi latérale du clapet principal soit constamment baignée par le fluide amont, et un certain jeu constituant ledit passage est ménagé entre le corps et le clapet dans la position d'ouverture de la vanne.

L'invention sera mieux comprise à la lecture de la description faite ci-dessous, à titre d'exemple seulement, en se référant au dessin dans lequel :

la figure 1 est une coupe axiale d'une première forme de réalisation d'une vanne selon l'invention, et

la figure 2 est une coupe axiale d'une vanne selon l'invention selon une seconde forme de réalisation.

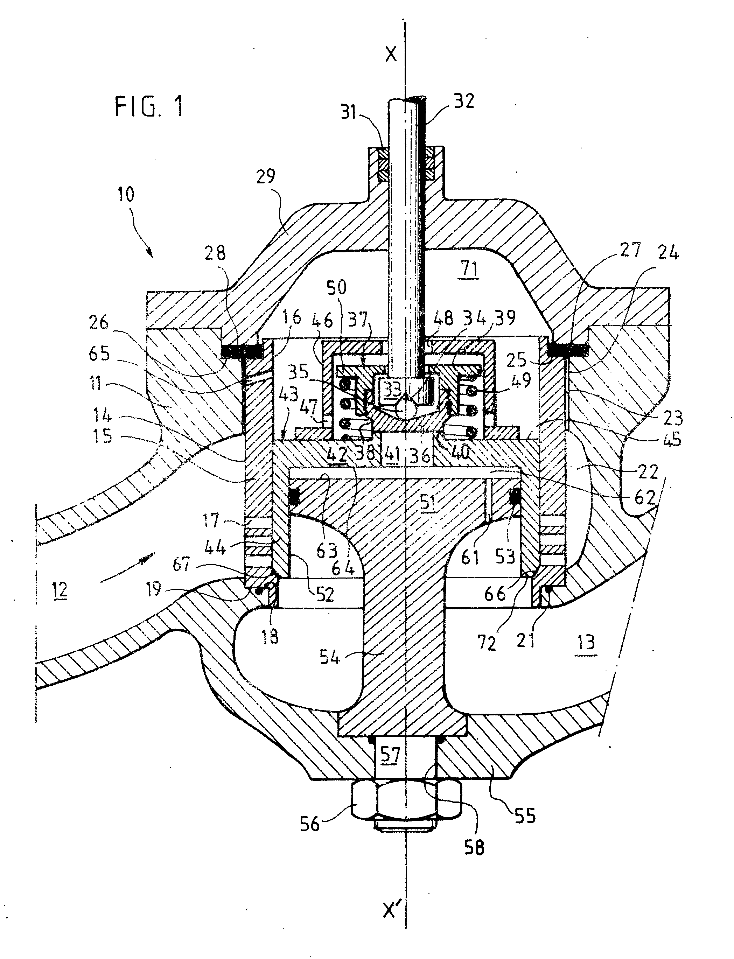

La vanne de régulation 10 illustrée à la figure 1 comporte un corps 11 à passage traversant dans lequel le fluide à commander se déplace d'une entrée 12 à une sortie 13 en passant de la surface extérieure 14 d'une cage cylindrique 15 à la surface intérieure 16 de celle-ci par des ouvertures latérales 17 qui y sont ménagées, et dont la forme et la section sont choisies en fonction de la courbe caractéristique et des performances de la vanne que l'on veut obtenir.

La cage 15, qui prend appui par son bord inférieur 18 sur un épaulement annulaire 19 présenté par le corps 11 avec interposition d'un joint d'étanchéité 21, s'étend d'abord dans une chambre annulaire 22 ménagée dans le corps, qui est en communication avec l'entrée 12 et en regard des ouvertures 17, puis avec un jeu 23 dans une cheminée cylindrique 24 du corps, jusqu'au bord supérieur 26 de la cheminée 24 avec lequel un décrochement 25 de son bord supérieur est de niveau.

Un joint 27 d'étanchéité est pressé sur le décrochement 25 et le bord 26 par la surface annulaire inférieure 28 d'un chapeau 29 maintenu sur la partie supérieure du corps par des moyens non représentés, et traversé avec interposition de moyens d'étanchéité 31 par une tige de commande 32 coaxiale à l'axe XX' de la cage 15. La partie supérieure de la tige 32, extérieure au corps et au chapeau de la vanne, est reliée à des moyens de déplacements axiaux non représentés, et son extrémité inférieure comporte un renflement cylindrique 33 dont la face inférieure cônique 34 reçoit une bille 35 portée par le fond 36 d'un clapet pilote 37 formé d'une partie inférieure 38 et d'une partie supérieure 39 rendues solidaires par vissage et entourant le renflement 33.

Le fond 36 est apte, lorsque la tige 32 est déplacée vers le corps 11, à fermer par sa surface plane inférieure venant au contact d'une portée 40, un orifice de passage 41 ménagé dans le fond 42, sensiblement normal à l'axe XX', d'un clapet principal 43 en forme de pot, dont la paroi latérale cylindrique 44 glisse sur la surface interne 16 de la cage 15, la face 45 amont du fond 42, ou face en regard du chapeau 29 étant solidarisée, par des moyens non représentés, au bord inférieur d'une cloche 46.

La cloche 46, percée de trous latéraux 47 et d'un trou axial 48 recevant la tige 32, entoure le clapet pilote 37, un ressort 49 étant placé entre la face 45 amont du fond 42 et une lèvre annulaire 50 présentée par la partie supérieure 39 du clapet pilote 37 de manière à solliciter le clapet pilote 37 vers le fond de la cloche 46, c'est-à-dire à l'ouverture de l'orifice de passage 41.

Le clapet principal 43 coiffe un plateau 51 circulaire, disposé sensiblement perpendiculairement à l'axe XX', avec interposition entre la surface interne 52 de la paroi 44 et le plateau 51 d'un joint d'étanchéité 53 logé dans une rainure de la paroi latérale du plateau, ce dernier présentant, à l'opposé de la tige 32, un pied axial 54 solidarisé avec le fond 55 du corps 11 opposé au chapeau 29 grâce à un goujon 57 engagé dans un trou 58 du fond 55 et fixé à ce dernier par un boulon 56.

Un trou traversant 61 de section $S_1$ est ménagé dans le plateau de manière à faire communiquer la sortie 13 de la vanne avec la chambre aval 62 limitée par la surface supérieure 63 du plateau 51 et la surface inférieure ou aval 64 du fond 42, et un passage traversant 65 est ménagé dans la cage 15 au niveau de la cheminée 24.

Le fonctionnement de la vanne qui vient d'être décrite est le suivant :

Dans l'état fermé de la vanne, qui est celui représenté, la partie périphérique 66 de la tranche aval de la paroi 44 est au contact d'une portée d'étanchéité 67 ménagée sur la surface interne 16 de la cage 15, en dessous des ouvertures latérales 17, de manière à empêcher tout passage direct du fluide de la chambre annulaire 22 vers la sortie 13, et le clapet pilote 37 porte par sa partie inférieure 38 sur la portée 40 présentée par la surface 45 du fond 42 autour de l'orifice 41, de manière à empêcher tout passage du fluide de la chambre amont 71 limitée par le chapeau 29, la partie supérieure de la cage 15, et la surface 45 amont du clapet 43, vers la chambre 62.

Le fluide amont présent à l'entrée 12 se glisse dans le jeu 23 ménagé entre la cage 15 et le corps 11, puis dans le passage 65 pour remplir la chambre 71 et sa pression $P_1$ s'exerce donc sur toute la surface 45, soit directement, soit par l'intermédiaire de la cloche 46 ou du clapet pilote 37.

Le fluide se trouvant dans la chambre 62 est ramené par l'intermédiaire du trou 61 à la pression aval $P_2$, si bien que c'est sensiblement la différence des pressions $P_1 - P_2$ qui s'exerce sur le clapet 43 pour l'appliquer sur la portée 67.

Dans cette configuration également, les à-coups de la pression aval $P_2$ sont filtrés par le trou 61, de section limitée, et seules les forces résultant de la pression s'exerçant sur la surface 72 annulaire interne de la tranche de la paroi 44 qui n'est pas en contact avec la portée 67, de valeur très réduite par rapport à la surface 64, sont transmises par le clapet 43 vers la tige 32.

Dans une variante de réalisation non représentée, le trou 61 comporte un dispositif anti-retour interdisant complètement tout passage brusque du fluide aval dans la chambre 62.

Lorsque l'on désire passer en position de régulation, la tige 32 est soulevée, ce qui a d'abord pour effet de libérer l'orifice 41, si bien que le fluide se trouvant dans le chambre 71, sous une pression $P_1$ égale à celle du fluide amont, passe dans la chambre 62, les surfaces 45 et 64 du fond 42 du clapet principal 43 étant soumises toutes les deux à la même pression $P_1$.

La valeur de la surface 45 étant égale à la somme de celles de la surface 64 et des surfaces 66 et 72, le clapet 43 est alors soumis à une force F axiale dirigée de la tige 32 vers le pied 54, et de valeur sensiblement égale à :

$$F = (\pi/4) (P_1 - P_2) (D_e^2 - D_i^2) \qquad (1)$$

expression dans laquelle $D_e$ et $D_i$ sont les diamètres externe et interne de la paroi 44.

La tige 32 continuant à être soulevée, la force qu'elle exerce par l'intermédiaire du ressort 49 sur le clapet 43 diminue et le ressort reste comprimé jusqu'au moment où la face supérieure du claper 37 s'applique sur le fond de la cloche 46, ce qui a pour résultat d'entraîner vers le haut le clapet 43 qui suit alors exactement le mouvement de la tige 32 et découvre des rangées successives d'ouvertures latérales 17, libérant ainsi un passage direct de l'entrée 12 vers la sortie 13 pour le fluide à commander.

Lorsque le débit du fluide ou la différence de pression $P_1 - P_2$ a atteint la valeur désirée, le mouvement de la tige 32 est arrêté, et l'on choisit les sections $S_1$, $S_2$ et $S_3$ du trou traversant 61, de l'orifice 41, et du passage 65 ainsi que le jeu 24 de manière que :

$$S_3 > S_1,$$
$$S_2 \gg S_3,$$

si bien qu'il s'établit un passage continuel de fluide de l'entrée 12 vers la chambre 71, puis vers la chambre 62 et enfin vers la sortie 13, la force F tendant à ouvrir l'orifice 41, et à maintenir dans une position d'équilibre stable le clapet 43.

Comme précédemment, les variations brusques de la pression $P_2$ n'agissent sur la tige 32 que par l'intermédiaire des surfaces 72 et 66 de la tranche de la paroi 44, surfaces extrêmement réduites par rapport à celle du fond 42.

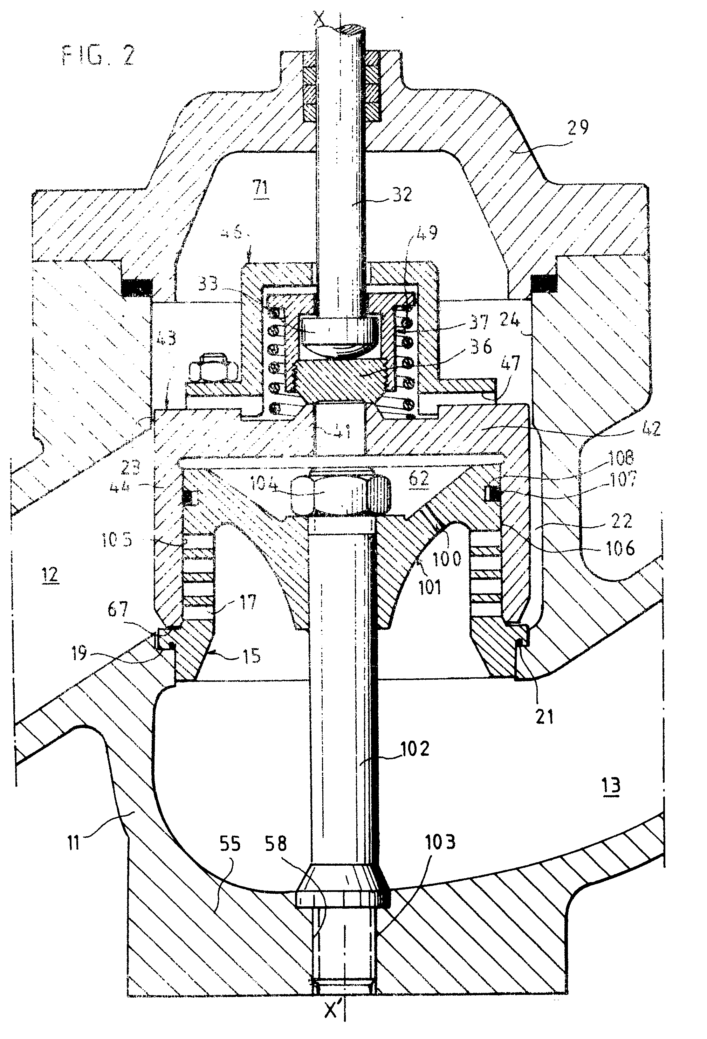

Dans une seconde forme de réalisation, la vanne comporte (fig. 2, les éléments semblables de la figure 1 et de la figure 2 ayant les mêmes références), de manière similaire à la vanne décrite précédemment, un corps 11, un chapeau 29, une tige 32 agissant sur un clapet principal 43 par l'intermédiaire d'un renflement 33, d'un clapet pilote 37, d'une cloche 46, et d'un ressort 49, le fond 42 du clapet 43 présentant un orifice 41 apte à être obturé par le fond 36 du clapet pilote 37, la chambre 71 communiquant avec la chambre 62 par l'intermédiaire de l'orifice 41 et des ouvertures 47 ménagées dans la cloche 46.

La cage 15 s'applique comme précédemment sur le décrochement annulaire 19 du fond du corps 11 avec interposition d'un joint d'étanchéité 21 et présente en regard de la chambre 22 une configuration cylindrique axiale dans laquelle sont percées une pluralité de rangées d'ouvertures latérales 17.

Cependant, contrairement à la réalisation précédente, la cage 15 ne s'étend pas jusqu'au chapeau 29, mais se coude vers l'axe XX' pour former un fond 101 circulaire, à légère cônicité dirigée vers le fond 55 du corps 11, comportant un passage traversant 100 en regard du fond 42, et percé en son centre d'une ouverture de passage d'une entretoise 102 ancrée par son filetage inférieur 103 dans le trou taraudé 58, un boulon 104 étant vissé sur la partie supérieure filetée de l'entretoise 102, qui dépasse du fond 101 vers la chambre 71, de manière à appliquer fermement la cage 15 sur le décrochement 19.

Le clapet 43 est logé avec un jeu 23 dans la cheminée 24 du corps 11, et sa paroi 44 s'étend vers le fond 55 du corps 11 dans le volume annulaire 22, en entourant la cage 15, sa surface interne 105 glissant sur la surface externe 106 de la partie cylindrique de cette dernière, avec interposition d'un joint 107 logé dans une rainure annulaire 108 placée au-dessus des ouvertures latérales 17 de la cage 15.

Le fonctionnement de la vanne qui vient d'être décrite est similaire au fonctionnement de la vanne précédente, le jeu existant entre la paroi 44 et la cheminée 24 jouant le rôle du passage 65, la portée 67 étant ici placée sur la partie inférieure de la surface 106, sous les ouvertures 17.

Dans des modes de réalisation non représentés, la surface inférieure du fond 36 du clapet pilote 37 peut être conique ou sphérique.

**Revendications**

1. Robinet de réglage (10) du débit d'un liquide sous haute pression comportant :

— un corps (11) qui forme une entrée et une sortie,

— une cage tubulaire (15) qui est fixe par rapport au corps et dont la paroi est percée d'ouvertures latérales (17) pour le passage du liquide,

— un obturateur cylindrique (43) qui coulisse par rapport à la cage (15) de sorte qu'il dégage progressivement les ouvertures latérales (17),

— une soupape pilote (37) qui peut obturer un orifice (41) dans le fond transversal (42) de l'obturateur (43),

— une tige de commande (32) à déplacement axial (X, X') entraînant la soupape pilote (37), caractérisé par le fait que :

— le corps (11) porte du côté aval un piston fixe (51, 101) qui est coaxial avec l'obturateur (43),

— l'obturateur (43) est en forme de pot dont les parois latérales coulissent sur le piston fixe (51, 101),

— le piston fixe (51, 101) présente au moins un trou (61, 100) de faible section qui fait communiquer les surfaces amont et aval du piston (51, 101).

2. Robinet selon la revendication 1, caractérisé en ce que, pour permettre à la pression amont de s'exercer sur la face amont (45) de l'obturateur (43), un passage (65) est ménagé entre l'entrée du robinet et une chambre amont (71) délimitée par la face amont (45) de l'obturateur (43) et le chapeau (29) traversé à étanchéité par la tige.

3. Robinet selon la revendication 2, caractérisé en ce qu'un clapet anti-retour est placé dans le trou traversant (61, 100) pour interdire tout passage du fluide aval vers la chambre aval délimitée par le piston fixe (51, 101) et l'obturateur (43).

4. Robinet selon une quelconque des revendications 1 à 3, caractérisé en ce que la section de l'orifice traversant (41) ménagé dans le fond transversal (42) de l'obturateur (43) est largement supérieure à celle du passage (65).

5. Robinet selon une quelconque des revendications 1 à 4, caractérisé en ce que le passage présente lui-même une section supérieure à celle du trou (61, 100) traversant le piston fixe (51, 101).

6. Robinet selon une quelconque des revendications 2 à 5, caractérisé en ce que le passage (65) est réalisé par un trou (65) traversant la cage (15) et communiquant avec l'entrée du robinet par un interstice (23) ménagé entre la paroi externe de la cage et le corps du robinet.

7. Robinet selon une quelconque des revendications précédentes, caractérisé en ce que le piston fixe (101) est constitué par la cage elle-même, qui comporte alors elle aussi un fond (101), la paroi latérale (44) de l'obturateur (43) en forme de pot coulissant entre la surface extérieure de la cage (15) et le corps du robinet.

8. Robinet selon la revendication 7, caractérisé en ce que le fond (101) de la cage est boulonné à une entretoise (102) solidaire du fond (55) du corps (11) du robinet.

9. Robinet selon la revendication 7 ou la revendication 8, caractérisé en ce que le corps (11) est conformé de manière que dans la position de régulation et/ou de fermeture, la surface extérieure de la paroi latérale (44) de l'obturateur (43) soit constamment baignée par le fluide amont, un certain jeu (23) constituant ledit passage étant ménagé entre le corps (11) et l'obturateur (43) dans la position d'ouverture du robinet.

**Claims**

1. A valve (10) for regulating the flow rate of a liquid under high pressure comprising :

— a body (11) which forms an inlet and an outlet,

— a tubular cage (15) which is fixed relative to the body and whose wall has lateral openings (17) for the passage of the liquid,

— a cylindrical stopper (43) which slides relative to the cage (15) so as to gradually uncover the lateral openings (17),

— a pilot valve (37) which is able to close an opening (41) at the transverse bottom (42) of the stopper (43),

— a control rod (32) which moves axially (XX') and drives the pilot valve (37), characterized in that :

— the body (11) supports on its unpstream side a fixed piston (51, 101) which is coaxial with the stopper (43),

— the stopper (43) has a pot-like shape whose side walls slide on the fixed piston (51, 101),

— the fixed piston (51, 101) has at least one hole (61, 100) with a small cross-section which interconnects the piston upstream and downstream surfaces (51, 101).

2. A valve according to claim 1 characterized in that in order that the upstream pressure be applied on the upstream face (45) of the stopper (43) a passageway is arranged between the inlet of the valve and an upstream chamber (71) defined by the upstream face (45) of the stopper (43) and the bonnet (29) which is imperviously crossed-through by the rod.

3. A valve according to claim 2, characterized in that a nonreturn valve is placed within the cross-trough hole (61, 100) to block any passage of the upstream fluid to the upstream chamber defined by the fixed piston (51, 101) and the stopper (43).

4. A valve according to any of claims 1 to 3 characterized in that the cross-section of the cross-through opening (41) arranged in the transverse bottom of the stopper (43) is substantially greater than that of the passageway (65).

5. A valve according to any of claims 1 to 4 characterized in that the passageway itself has a cross-section greater than that of the hole (61, 100) crossing the fixed piston (51, 101).

6. A valve according to any of claims 2 to 5 characterized in that the passageway (65) is realised by a hole (65) crossing the cage (15) and communicating with the inlet opening of the valve through a gap (23) arranged between the outer wall of the cage and the valve body.

7. A valve according to any of the preceding claims characterized in that the fixed piston (101) is constituted by the cage itself, which then also includes a bottom (101), the pot-shaped side wall (44) of the stopper (43) which slides between the outer surface of the cage (15) and the valve body.

8. A valve according to claim 7 characterized in that the bottom (101) of the cage is bolted to a cross-bar (102) extending from the bottom (55) of the valve body (11).

9. A valve according to claim 7 or 8 characterized in that the body (11) is shaped so that in the regulation and/or shutting positions, the outer surface of the side wall (44) of the stopper (43) is permanently immersed in the upstream fluid, with a gap (23) forming said passageway arranged between the body (11) and the stopper (43) in the opening position of the valve.

**Patentansprüche**

1. Regulierhahn (10) für die Durchflußleistung einer unter hohem Druck stehenden Flüssigkeit, enthaltend :
— einen Körper (11), der einen Einlaß und einen Auslaß bildet,
— einen Rohrmantel (15), der in bezug auf den Körper feststeht und dessen Wandung von seitlichen Öffnungen (17) für den Durchgang der Flüssigkeit durchbrochen ist,
— ein zylindrisches Verschlußglied (43), das in bezug auf den Mantel (15) gleitverschiebbar ist, so daß es die seitlichen Öffnungen (17) progressiv freigibt,
— ein Pilotventil (37), welches eine Öffnung (41) im Querboden (42) des Verschlußgliedes (43) verschließen kann,
— eine Steuerstange (32), die axial verschiebbar ist (X, X') und das Pilotventil (37) betätigt,
dadurch gekennzeichnet, daß :
— der Körper (11) auf der Abflußseite einen feststehenden Kolben (51, 101) trägt, der koaxial zu dem Verschlußglied (43) ist,
— das Verschlußglied (43) die Form eines Topfes besitzt, dessen Seitenwände auf dem feststehenden Kolben (51, 101) gleiten,
— der feststehende Kolben (51, 101) wenigstens ein Loch (61, 100) von geringem Querschnitt aufweist, durch welches die zuströmseitigen und abströmseitigen Flächen des Kolbens (51, 101) miteinander in Verbindung sind.

2. Hahn nach Anspruch 1, dadurch gekennzeichnet, daß ein Durchgang (65) zwischen dem Einlaß des Hahnes und einer zuströmseitigen Kammer (71), welche durch die zuflußseitige Fläche (45) des Verschlußgliedes (43) und der unter Abdichtung durch die Stange durchquerten Haube (29) begrenzt ist, angebracht ist, damit der zuflußseitige Druck auf der zuflußseitigen Fläche (45) des Verschlußgliedes (43) wirksam werden kann.

3. Hahn nach Anspruch 2, dadurch gekennzeichnet, daß ein Rückschlagventil in dem durchquerenden Loch (61, 100) angeordnet ist, um jeglichen Flüssigkeitsdurchgang von der Abflußseite zur abflußseitigen Kammer zu unterbinden, die durch den feststehenden Kolben (51, 101) und das Verschlußglied (43) begrenzt ist.

4. Hahn nach einem der Ansprüche 1 bis 3, dadurch gekennzeichnet, daß der Querschnitt der durchquerenden Öffnung (41), welcher am Querboden (42) des Verschlußgliedes (43) angebracht ist, wesentlich größer als der des Durchganges (65) ist.

5. Hahn nach einem der Ansprüche 1 bis 4, dadurch gekennzeichnet, daß der Durchgang seinerseits einen Querschnitt aufweist, der größer als der des Loches (61, 100) ist, welches den feststehenden Kolben (51, 101) durchquert.

6. Hahn nach einem der Ansprüche 2 bis 5, dadurch gekennzeichnet, daß der Durchgang (65) durch ein Loch (65) gebildet ist, welches den Mantel (15) durchquert und mit dem Einlaß des Hahnes über einen Zwischenraum (23) in Verbindung ist, der zwischen der Außenwandung des Mantels und dem Körper des Hahnes angebracht ist.

7. Hahn nach einem der vorstehenden Ansprüche, dadurch gekennzeichnet, daß der feststehende Kolben (101) durch den Mantel selbst gebildet ist, der dann ebenfalls einen Boden (101) umfaßt, wobei die Seitenwand (44) des topfförmigen Verschlußgliedes (43) zwischen der Außenoberfläche des Mantels (15) und dem Körper des Hahnes gleitet.

8. Hahn nach Anspruch 7, dadurch gekennzeichnet, daß der Boden (101) des Mantels mit einer Strebe (102) verschraubt ist, welche fest mit dem Boden (55) des Körpers (11) des Hahnes verbunden ist.

9. Hahn nach Anspruch 7 oder 8, dadurch gekennzeichnet, daß der Körper (11) derart gestaltet ist, daß in der Regulierstellung und/oder Schließstellung die Außenoberfläche der Seitenwand (44) des Verschlußgliedes (43) ständig von der zuflußseitigen Flüssigkeit benetzt ist, wobei ein gewisses, den genannten Durchgang bildendes Spiel (23) zwischen dem Körper (11) und dem Verschlußglied (43) in der Öffnungsstellung des Hahnes vorgesehen ist.

FIG. 1

FIG. 2